# EUROPÄISCHE PATENTANMELDUNG

(11) **EP 0 727 332 A1**
(43) Veröffentlichungstag der Anmeldung: **21.08.1996**
(21) Anmeldenummer: 95118265.8
(22) Anmeldetag: 21.11.1995
(51) Int. Cl.: B60K 6/02

(54) **Parallelhybridantrieb für ein Kraftfahrzeug**

(30) Priorität: 15.02.1995 DE 19505027
(71) Anmelder: FICHTEL & SACHS AG, D-97424 Schweinfurt (DE)
(72) Erfinder: Röder, Manfred, Dipl.-Ing., D-97525 Schwebheim (DE); Rüthlein, Alfred, Dipl.-Ing., D-97526 Sennfeld (DE); Schmidt-Brücken, Hans-Joachim, Dipl.-Physiker, D-97505 Geldersheim (DE); Schulz-Andres, Heiko, Dipl.-Ing., D-97490 Poppenhausen (DE); Tulaczko, Boleslaw, Dipl.-Ing., D-97464 Niederwerrn (DE); Welke, Knut, Dipl.-Ing., D-97456 Dittelbrunn (DE); Wirth, Thomas, Dipl.-Ing., D-97523 Schwanfeld (DE)

(57) **Zusammenfassung**

Es wird ein Parallelhybridantrieb für ein Kraftfahrzeug vorgeschlagen, bei welchem ein Verbrennungsmotor (1) und eine elektrische Maschine (5) auf, bezogen auf die Eingangswelle (15) des Getriebes (3), voneinander abgewandten Seiten des Getriebes (3) angeordnet sind. Der Verbrennungsmotor (1) und die elektrische Maschine (5) sind mit der von beiden Seiten des Getriebes (3) her zugänglichen Eingangswelle (15) des Getriebes (3) verbunden. Mit dem Getriebe (3) ist zu einer Baueinheit ein Ausgleichsgetriebe (23) fest verbunden, das im Abstand zur elektrischen Maschine (5) angeordnet ist und seinerseits mit quer zur Eingangswelle (15) verlaufenden Achsantriebswellen (25) verbunden ist. Für die Unterbringung der elektrischen Maschine (5) bei diesem eine Frontantriebseinheit bildenden Aggregat verbleibt auf diese Weise vergleichsweise viel Bauraum.

## Beschreibung

Die Erfindung betrifft einen Parallelhybridantrieb für ein Kraftfahrzeug.

Aus DE-C-33 20 950 und DE-A-37 37 192 sind Hybridantriebe für Kraftfahrzeuge bekannt, bei welchen das Kraftfahrzeug sowohl von einem Verbrennungsmotor als auch einem Elektromotor aus angetrieben werden kann. Der Elektromotor ist zwischen dem Verbrennungsmotor und einem mehrgängigen Schaltgetriebe angeordnet, wobei im Drehmomentübertragungsweg sowohl zwischen dem Verbrennungsmotor und dem Elektromotor als auch zwischen dem Elektromotor und der Eingangswelle des Schaltgetriebes eine Trennkupplung in Form einer Trocken-Reibungskupplung angeordnet ist. Die beiden Kupplungen werden durch koaxial zueinander und zur Getriebeeingangswelle angeordnete Ausrückorgane gesteuert. Beim Antrieb des Kraftfahrzeugs durch den Elektromotor ist die zwischen dem Elektromotor und dem Verbrennungsmotor angeordnete Trennkupplung geöffnet. Die zwischen dem Elektromotor und dem Schaltgetriebe angeordnete Kupplung wird als Trenn- und Schaltkupplung für den Gangwechsel und beim Anfahren ausgenutzt. Bei dem bekannten Parallelhybridantrieb müssen nicht nur zwei gesondert schaltbare Reibungskupplungen unter ohnehin räumlich begrenzten Bedingungen zwischen Schaltgetriebe und Verbrennungsmotor untergebracht werden, sondern auch zusätzlich der Elektromotor. Da die Kupplungen und der Elektromotor innerhalb der das Getriebe mit Verbrennungsmotor verbindenden Gehäuseglocke des Getriebes untergebracht sind, können sich Temperatur- und Kühlungsprobleme ergeben.

Aus DE-C-42 02 083 ist ein weiterer Hybridantrieb für ein Kraftfahrzeug bekannt, bei welchem der Elektromotor nicht unmittelbar mit der Eingangswelle des mehrgängigen Schaltgetriebes verbunden ist, sondern mit einer Vorgelegewelle, die ihrerseits über ein Zahnradpaar von der Eingangswelle des Getriebes her angetrieben wird. Der Verbrennungsmotor ist hierbei herkömmlich über eine Reibungs-Trennkupplung mit der Eingangswelle verbunden. Da der Elektromotor die Massenträgheit der Vorgelegewelle erhöht, wird er beim Gangwechsel zur aktiven Unterstützung der Synchronisierorgane des Schaltgetriebes antreibend oder bremsend eingeschaltet. Wegen des geringen Achsabstands zwischen der zum Ausgleichsgetriebe bzw. Differentialgetriebe führenden Ausgangswelle des Getriebes und dessen Vorgelegewelle ist auch hier die elektrische Maschine räumlichen Begrenzungen unterworfen.

Es ist Aufgabe der Erfindung, einen Parallelhybridantrieb für ein Kraftfahrzeug anzugeben, bei welchem die elektrische Maschine in ihrer Leistungsfähigkeit und ihrem Platzbedarf besser als bisher optimiert werden kann.

Die Erfindung geht aus von einem Parallelhybridantrieb für ein Kraftfahrzeug, welcher umfaßt:
einen Verbrennungsmotor,
eine elektrische Maschine,
ein in Stufen schaltbares Getriebe mit einer Eingangswelle und einer Ausgangswellenanordnung, wobei die Eingangswelle über einen ersten Drehmomentübertragungsweg mit dem Verbrennungsmotor und über einen zweiten Drehmomentübertragungsweg mit der elektrischen Maschine verbunden ist und wobei die elektrische Maschine auf der in Achsrichtung der Eingangswelle dem Verbrennungsmotor abgewandten Seite des Getriebes angeordnet ist, und
eine Trennkupplung im ersten Drehmomentübertragungsweg.

Bei einem solchen Parallelhybridantrieb ist erfindungsgemäß vorgesehen, daß das Getriebe mit einem an ein Achsantriebswellenpaar anschließbaren Ausgleichsgetriebe zu einer Baueinheit fest verbunden ist und das Ausgangsgetriebe in Achsrichtung der Eingangswelle zum Verbrennungsmotor hin versetzt und im Abstand von der elektrischen Maschine am Getriebe angeordnet ist.

Der Erfindung liegt die Idee zugrunde, unter Ausnutzung des für den Achsantrieb der Antriebsräder ohnehin benötigten Ausgleichs- bzw. Differentialgetriebes Platz zur Unterbringung der elektrischen Maschine an dem Getriebe zu schaffen. Zwischen dem Verbrennungsmotor und dem Getriebe ist damit in herkömmlicher Weise lediglich die Trennkupplung und gegebenenfalls deren Ausrückeinrichtungen untergebracht, so daß auf herkömmliche Getriebeglockenkonstruktionen zurückgegriffen werden kann. Dies ist insbesondere von Vorteil für den verbrennungsmotorseitigen Teil der Eingangswelle des Getriebes, die auf diese Weise nicht verlängert werden muß, so daß die unter Umständen bei verlängerten Getriebeeingangswellen auftretenden Schwingungsneigungen vermieden werden. Die zweckmäßigerweise mit dem Getriebe zu einer Baueinheit verbundene elektrische Maschine kann gut zugänglich untergebracht werden, so daß Kühlprobleme herkömmlicher Parallelhybridantriebe mit der Getriebeglocke untergebrachter elektrischer Maschine vermieden werden können.

Die Erfindung eignet sich insbesondere für Frontantriebszwecke, bei welchen der Verbrennungsmotor, die Trennkupplung, das Getriebe und die elektrische Maschine zu einer Baueinheit zusammengefaßt sind. Je nach Einbaulage dieser Baueinheit kann das Achsantriebswellenpaar parallel oder quer zur Eingangswelle sich erstrecken, wobei insbesondere die letztgenannte Version besondere Freiheit bei der Einbausituation der elektrischen Maschine verschafft. Der zweite Drehmomentübertragungsweg, über den die elektrische Maschine mit der Eingangswelle des Getriebes verbunden ist, kann eine Getriebestufe, beispielsweise ein Zahnradpaar des Getriebes, mit umfassen. Beispielsweise kann die elektrische Maschine in an sich bekannter Weise auf eine Vorgelegewelle des Getriebes wirken.

In einer bevorzugten Ausführungsform ist die elektrische Maschine gleichachsig zur Eingangswelle angeordnet und direkt an die Eingangswelle gekuppelt. Hierbei läßt sich vorteilhaft ausnutzen, daß die Eingangswelle üblicherweise ausgehend von ihrem die Kupplungsscheibe der Trennkupplung tragenden motorseitigen Ende einen gestuft zunehmenden Durchmesser hat, die elektrische Maschine also am dickeren Ende der Eingangswelle angreift. Unter "direkter" Kupplung der Eingangswelle mit der elektrischen Maschine soll hierbei nicht nur eine betriebsmäßig ständig drehfeste Verbindung zwischen der Eingangswelle und dem Läufer der elektrischen Maschine verstanden werden, sondern es sollen auch betriebsmäßig trennbare Verbindungen die direkte Kupplung ermöglichen. Hierunter sollen auch zusätzliche, steuerbare Trennkupplungen fallen, wie dies nachstehend erläutert wird.

In einer bevorzugten Ausgestaltung ist vorgesehen, daß im zweiten Drehmomentübertragungsweg eine weitere Trennkupplung angeordnet ist. Die weitere Trennkupplung erlaubt es, die elektrische Maschine beispielsweise beim Wechseln der Gänge von der Eingangswelle gezielt zu trennen, was das Wechseln der Gänge erleichtert und die Synchronisierung des Getriebes schont. Es versteht sich, daß anstelle der weiteren Trennkupplung auch hier die elektrische Maschine für eine aktive Unterstützung der Synchronisierung motorisch antreibend oder generatorisch bremsend betrieben werden kann. Die weitere Trennkupplung kann als herkömmliche trockene Reibungskupplung oder dergleichen ausgebildet sein. Vorzugsweise ist sie jedoch als naßlaufende Kupplung ausgebildet und innerhalb des Getriebegehäuses untergebracht. Geeignet sind insbesondere Lamellenkupplungen, wie sie beispielsweise bei automatischen Getrieben zum Einsatz kommen.

Im folgenden wird die Erfindung anhand einer Zeichnung näher erläutert. Hierbei zeigt:
- Fig. 1: eine schematische Darstellung eines Parallelhybrid-Frontantriebs für eine Kraftfahrzeug;
- Fig. 2: eine schematische Darstellung einer Variante des Parallelhybrid-Frontantriebs und
- Fig. 3: eine schematische Darstellung einer weiteren Variante des Parallelhybrid-Frontantriebs.

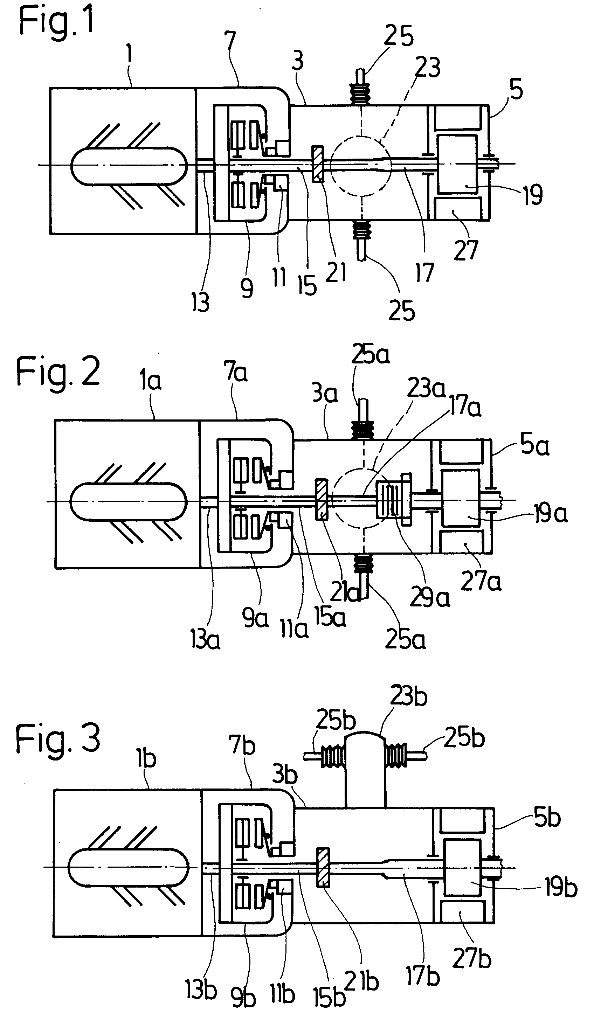

Die in Fig. 1 dargestellte Frontantriebs-Baueinheit umfaßt einen Verbrennungsmotor 1 mit einem daran angeflanschten, in Stufen schaltbaren Getriebe 3 und einer auf der dem Verbrennungsmotor 1 abgewandten Seite des Getriebes 3 an diesem angeflanschten, elektrischen Maschine 5. In einer von dem Gehäuse des Getriebes 3 dem Verbrennungsmotor 1 benachbart gebildeten Getriebeglocke 7 ist eine herkömmliche Reibungs-Trennkupplung 9 untergebracht, die über eine Ausrückanordnung 11 betätigt wird und eine bei 13 angedeutete Kurbelwelle des Verbrennungsmotors 1 mit einer Eingangswelle 15 des Getriebes in einem ersten Drehmomentübertragungsweg verbindet. Die zur Kurbelwelle 13 gleichachsige Eingangswelle 15 erstreckt sich durch das Getriebe 3 hindurch und ist mit ihrem, bezogen auf das verbrennungsmotorseitige Ende dickeren anderen Ende 17 mit einem Läufer 19 der elektrischen Maschine 5 drehfest verbunden. Die Eingangswelle 15 trägt, je nach Konstruktionstyp des Getriebes 3, drehfest zumindest ein Zahnrad 21, das mit wenigstens einem Zahnrad insbesondere einer nicht näher dargestellten Vorgelegewelle des Getriebes 3 kämmt oder in Eingriff bringbar ist. Der Konstruktionstyp des Getriebes 3 ist jedoch nicht Gegenstand der Erfindung. Bei dem Getriebe 3 kann es sich um ein manuell schaltbares Getriebe, um ein automatisiertes Getriebe oder auch um ein auf der Basis von Planetengetriebesätzen aufgebautes Automatikgetriebe handeln. Wesentlich ist, daß das Getriebe 3 zu einer Baueinheit mit einem Differentialgetriebe bzw. Ausgleichsgetriebe 23 zu einer Baueinheit fest verbunden ist, welches seinerseits mit einem Paar Antriebsachsen 25 in drehfester Verbindung steht. Das Ausgleichsgetriebe 23 und dementsprechend die Antriebsachsen 25 sind auf der zum Verbrennungsmotor 1 hin gelegenen Seite im Abstand von der elektrischen Maschine 5 angeordnet, wobei im dargestellten Ausführungsbeispiel die Antriebsachsen 25 quer zur Eingangswelle 15 verlaufen. Die dem Verbrennungsmotor 1 abgewandte Seite des Getriebes 3 steht damit im wesentlichen vollständig für die Unterbringung der elektrischen Maschine 5 zur Verfügung.

Bei der elektrischen Maschine 5 kann es sich um eine herkömmliche Drehfeldmaschine handeln, deren Läufer 19 ein mit Feldwicklungen versehener Ständer 27 zugeordnet ist. Der Läufer 19 kann, wie dargestellt, als Innenläufer ausgebildet sein; es kann sich aber auch um einen den Ständer 27 radial außen umschließenden Außenläufer handeln. Hohe elektrische Leistungen bei geringen Abmessungen lassen sich auf der Basis von Permanentmagnet-Außenläufern erreichen.

Im Betrieb kann der Antrieb des Kraftfahrzeugs durch die dann motorisch betriebene elektrische Maschine 5 bei geöffneter Trennkupplung 9 allein erfolgen oder aber bei geschlossener Trennkupplung 9 durch den Verbrennungsmotor 1 allein. Die elektrische Maschine 5 kann hierbei leerlaufen oder aber generatorisch zum Laden einer nicht näher dargestellten Traktionsbatterie des Kraftfahrzeugs ausgenutzt werden. Es versteht sich, daß das Kraftfahrzeug auch durch den Verbrennungsmotor 1 und die motorisch betriebene elektrische Maschine 5 gleichzeitig angetrieben werden kann. Zum Schalten des Getriebes 3 wird beim Antrieb durch den Verbrennungsmotor 1 die Trennkupplung 9 in üblicher Weise betätigt. Beim Antrieb durch die elektrische Maschine 5 erübrigt sich die Betätigung der Trennkupplung 9 während des Schaltens und gegebenenfalls Anfahrens. Zur Unterstützung des Schaltvorgangs des Getriebes 3 und zur Entlastung von Synchronisierungseinrichtungen des Getriebes kann die elektrische Maschine motorisch antreibend oder generatorisch bremsend wirksam werden, und zwar auch bei alleinigem Antrieb des Kraftfahrzeugs durch den Verbrennungsmotor 1.

Bei der dargestellten Trennkupplung 9 handelt es sich um eine herkömmliche Reibungskupplung. Ihre Ausrückeinrichtung 11 kann von einem Kupplungspedal aus betätigt werden; die Ausrückeinrichtung 11 kann jedoch auch zur Automatisierung der Reibungskupplung mit einem Stellantrieb versehen sein. Es versteht sich, daß anstelle der Reibungskupplung auch eine hydrodynamische Kupplung oder ein Drehmomentwandler vorgesehen sein kann.

Nachstehend werden Varianten des Parallelhybrid-Frontantriebs erläutert. Gleichwirkende Komponenten sind mit den Bezugszahlen der Fig. 1 bezeichnet und zur Unterscheidung mit einem Buchstaben versehen. Zur Erläuterung von Aufbau und Wirkungsweise wird auf die Beschreibung der Fig. 1 Bezug genommen.

Im Unterschied zur Baueinheit der Fig. 1 ist der Läufer 19a der in Fig. 2 darstellten elektrischen Maschine 5a über eine betriebsmäßig lösbare Trennkupplung 29 mit der Eingangswelle 15a des Getriebes 3a verbunden. Der Läufer 19a kann damit betriebsmäßig von der Eingangswelle 15a abgekuppelt werden. Die Trennkupplung 29 ist als naßlaufende Lamellenkupplung ausgebildet und innerhalb des auch die Zahnräder des Getriebes enthaltenden Gehäuses des Getriebes 3a untergebracht. Steuerbare Lamellenkupplungen dieser Art sind an und für sich bekannt, beispielsweise zur Steuerung von Planetenradsätzen eines Automatikgetriebes. Durch Betätigen der Trennkupplung 29 kann beim Schalten der Gänge des Getriebes 3a die träge Masse des Läufers 19a von der Eingangswelle 15a abgekuppelt werden, was den Schaltvorgang erleichtert und Synchronisiereinrichtungen des Getriebes 3a schont.

Die in Fig. 3 dargestellte Variante des Parallelhybrid-Frontantriebs unterscheidet sich von der Baueinheit nach Fig. 1 lediglich dadurch, daß das Ausgleichsgetriebe 23b in einem quer zur Eingangswelle 15b von dem Getriebe 3b vorstehenden Ansatz untergebracht ist, so daß die Antriebsachsen 25b sich längs der Eingangswelle 15b und im Abstand von dem Getriebe 36 erstrecken. Die Antriebsbaueinheit ist damit für einen Einbau quer zur Fahrtrichtung in dem Fahrzeug bestimmt. Die anhand von Fig. 3 erläuterte Anordnungsweise des Ausgleichsgetriebes und der Antriebsachsen läßt sich auch bei der Variante der Fig. 2 realisieren.

## Patentansprüche

1. Parallelhybridantrieb für ein Kraftfahrzeug, umfassend:
- einen Verbrennungsmotor (1),
- eine elektrische Maschine (5),
- ein in Stufen schaltbares Getriebe (3) mit einer Eingangswelle (15) und einer Ausgangswellenanordnung (23, 25), wobei die Eingangswelle (15) über einen ersten Drehmomentübertragungsweg mit dem Verbrennungsmotor (1) und über einen zweiten Drehmomentübertragungsweg mit der elektrischen Maschine (5) verbunden ist und wobei die elektrische Maschine (5) auf der in Achsrichtung der Eingangswelle (15) dem Verbrennungsmotor (1) abgewandten Seite des Getriebes (3) angeordnet ist, und
- eine Trennkupplung (9) im ersten Drehmomentübertragungsweg,
dadurch gekennzeichnet, daß das Getriebe (3) mit einem an ein Achsantriebswellenpaar (25) anschließbaren Ausgleichsgetriebe (23) zu einer Baueinheit fest verbunden ist und das Ausgleichsgetriebe (23), bezogen auf die elektrische Maschine (5), in Achsrichtung der Eingangswelle (15) zum Verbrennungsmotor (1) hin versetzt und im Abstand von der elektrischen Maschine (5) an dem Getriebe (3) angeordnet ist.

2. Parallelhybridantrieb nach Anspruch 1, dadurch gekennzeichnet, daß die elektrische Maschine (5) gleichachsig zur Eingangswelle (15) angeordnet und direkt an die Eingangswelle (15) gekuppelt ist.

3. Parallelhybridantrieb nach Anspruch 1 oder 2, dadurch gekennzeichnet, daß im zweiten Drehmomentübertragungsweg eine weitere Trennkupplung (29) angeordnet ist.

4. Parallelhybridantrieb nach Anspruch 3, dadurch gekennzeichnet, daß die weitere Trennkupplung (29) als naßlaufende Kupplung ausgebildet und innerhalb eines Gehäuses des Getriebes (3a) angeordnet ist.

5. Parallelhybridantrieb nach Anspruch 3 oder 4, dadurch gekennzeichnet, daß die weitere Trennkupplung (29) als Lamellenkupplung ausgebildet ist.

6. Parallelhybridantrieb nach einem der Ansprüche 1 bis 5, dadurch gekennzeichnet, daß sich das Achsantriebswellenpaar (25) quer zur Eingangswelle (15) erstreckt.

7. Parallelhybridantrieb nach einem der Ansprüche 1 bis 6, dadurch gekennzeichnet, daß der Verbrennungsmotor (1), die Trennkupplung (9), das Getriebe (3) und die elektrische Maschine (5) eine Frontantriebs-Baueinheit bilden.
